# EUROPÄISCHE PATENTSCHRIFT

(11) **EP 1 207 355 B1**
(45) Veröffentlichungstag und Bekanntmachung des Hinweises auf die Patenterteilung: **09.01.2008**
(21) Anmeldenummer: 01126465.2
(22) Anmeldetag: 09.11.2001
(51) Int. Cl.: F24D 10/00

(54) **Zentrale Kühl- und/oder Heizvorrichtung für zumindest ein Gebäude**
Central heat- and/or cooling installation for at least one building
Installation centrale de chauffage et/ou de réfrigération pour au moins une bâtiment

(30) Priorität: 20.11.2000 DE 10057410
(43) Veröffentlichungstag der Anmeldung: 22.05.2002
(73) Patentinhaber: Bauer, Albert, 80939 München (DE)
(72) Erfinder: Bauer, Albert, 80939 München (DE)
(74) Vertreter: Borchert, Uwe Rudolf

(56) Entgegenhaltungen:
- EP-A- 0 681 148
- DE-A- 3 310 214
- DE-A- 3 340 351
- DE-A- 3 533 160
- DE-B- 1 054 688
- DE-B- 1 197 208
- DE-B- 1 253 429
- DE-C- 19 960 527
- FR-A- 2 724 160
- US-A- 4 019 681
- US-A- 4 065 055
- US-A- 5 178 324

## Beschreibung

Die Erfindung betrifft eine zentrale Kühl- und/oder Heizvorrichtung für zumindest ein Gebäude gemäß der im Oberbegriff des Anspruches 1 angegebenen Art.

Die bekannten zentralen Kühl- und/oder Heizvorrichtungen weisen im allgemeinen eine Hauptversorgungsleitung auf, an die über Zuführ- und Rückführleitungen eine Versorgungseinheit mit einer Verteilereinheit angeschlossen ist.

Eine Versorgungseinheit umfasst dabei in der Regel mehrere separate Kreisläufe, zum Beispiel einen Lüftungskreislauf, einen Heizkreislauf und einen Brauchwasserkreislauf. Über die Verteilereinheit erfolgt die Speisung der einzelnen Kreisläufe mit einem als Wärmeträger und/oder Kühlmittel dienenden Fluid sowie deren Entsorgung.

Entsprechend der Komplexität der zentralen Kühl- und/oder Heizvorrichtung setzt diese sich aus mehreren Versorgungseinheiten zusammen, die beispielsweise jeweils einen Gebäudeteil versorgen.

Die einzelnen Kreisläufe einer Versorgungseinheit bilden so genannte hydraulische Schaltungen. Sie weisen normalerweise eine Vorlauf- und Rücklaufleitung auf und sind über diese mit der zugehörigen Verteilereinheit verbunden. Je nach Ausführung der hydraulischen Schaltung ist zwischen Vorlaufleitung und Rücklaufleitung ein Bypass vorgesehen, der zusätzlich einen mechanischen Schieber enthalten kann. Die Schieberstellung wird dabei nicht geregelt, sondern fest eingestellt. Zudem ist vielfach entsprechend der realisierten hydraulischen Schaltung im Rücklauf des Kreislaufes ein Ventil zur Regulierung der Durchflussmenge angeordnet. Das Ventil wird in Abhängigkeit von der Vorlauftemperatur des Kreislaufes nach erfolgter Mischung mit dem Bypass, also der Temperatur im Vorlauf des Kreislaufes in Strömungsrichtung nach dem Bypass, geregelt und dient somit der Steuerung der Größe des im Kreislauf zirkulierenden Volumenstrom des Fluids.

Aus der US 51 78 324 B ist ebenfalls ein Ventil zur Regelung der Durchflussmenge durch den Kreislauf bekannt. Jedoch handelt es sich bei diesem Ventil um ein Differenzdruckventil, das die Durchflussmenge durch-den Kreislauf aufgrund des Differenzdruckens zwischen Vorlauf und Rücklauf regelt.

In der Vorlaufleitung eines Kreislaufes ist eine Pumpe installiert, die für die Umwälzung des Fluids im Kreislauf sorgt. Entsprechend der geforderten Funktion und Leistung des Kreislaufes sind mehrere Heiz-/Kühlkörper, Wärmetauscher oder ähnliche Geräte jeweils über Zulauf- und Ablaufleitungen an die Vorlaufleitung und Rücklaufleitung des entsprechenden Kreislaufes angeschlossen.

Weitere Heizvorrichtungen sind in der DE 3 310 214 A1 und in der US 5 178 324 gezeigt.

Die bekannten zentralen Kühl- und/oder Heizvorrichtungen haben jedoch den Nachteil, dass an den Verteilereinheiten, insbesondere an den Vorlauf- und Rücklaufleitungen der Kreisläufe, kein konstantes Druckniveau herrscht. Dies hat eine Beeinträchtigung des Wirkungsgrades der zentralen Kühl- und/oder Heizvorrichtungen zur Folge und ist somit mit erhöhten Betriebskosten verbunden.

Mit zunehmender Entfernung der Vorlaufleitung eines Kreislaufes zu der Zuführleitung der zugehörigen Versorgungseinheit nimmt nämlich der anliegende Vordruck ab, im Extremfall liegt am Vorlauf des äußersten Kreislaufes kein Vordruck mehr an. Um sicherzustellen, dass auch am entferntesten Kreislauf noch der benötigte Vordruck anliegt, muss die zentrale Kühl- und/oder Heizvorrichtung mit einem höheren Druckniveau betrieben werden, was mit zusätzlichen Energiekosten verbunden ist.

Ein Betreiben der zentralen Heiz- und/oder Kühlvorrichtung mit einem höheren Druckniveau bedeutet gleichzeitig, dass an den Kreisläufen in unmittelbarer Nähe zum Hauptvorlauf ein zu hohes Druckniveau anliegt. Dies verschlechtert den Wirkungsgrad der Anlage erheblich.

Beispielsweise bedeutet ein erhöhtes Druckniveau für einen als Einspritzschaltung realisierten Heizkreislauf, dass der Wärmeträger mit höherer Durchflussgeschwindigkeit in die Vorlaufleitung des Heizkreislaufes einfließt und infolgedessen eine überhöhte Vorlauftemperatur im Heizkreislauf vorliegt. Das in Abhängigkeit von der Vorlauftemperatur geregelte Ventil in der Rücklaufleitung des Heizkreislaufes wird daraufhin weiter geschlossen. Dadurch wird erreicht, dass der Rückfluss des Wärmeträgers mit steigendem Ventilschluss zunehmend über den Bypass erfolgt, um die gesamte Durchflussmenge des Wärmeträgers durch den Heizkreislauf und somit die Vorlauftemperatur zu senken. Aufgrund des stark erhöhten Druckniveaus im Vorlauf, kann der Bypass die gedachte Funktion des Rückflusses jedoch nicht übernehmen und es kommt zur Umkehr der Strömungsrichtung im Bypass. Die sich einstellende Fehlzirkulationen über den Bypass führt letztendlich zum Zusammenbruch des gesamten Heizkreislaufes, d.h. eine ausreichende Versorgung der Heizkörper mit dem Wärmeträger findet nicht mehr statt. Eine erhebliche Verschlechterung des Wirkungsgrades und somit steigende Energiekosten sind die Folge.

Der Erfindung liegt die Aufgabe zugrunde, eine zentrale Kühl- und/oder Heizvorrichtung gemäß der im Oberbegriff des Patentanspruches 1 angegebenen Art derart weiterzubilden, dass unter Vermeidung der genannten Nachteile bei einfacher Konstruktion eine Verbesserung des Wirkungsgrades und somit eine Senkung der Betriebskosten erreicht wird.

Diese Aufgabe wird durch die kennzeichnenden Merkmale des Anspruches 1 in Verbindung mit seinen Oberbegriffsmerkmalen gelöst.

Der Erfindung liegt die Erkenntnis zugrunde, dass jeweils durch eine Differenzdruckstabilisierung zwischen Zuführleitung und Rückführleitung einer Versorgungseinheit der Druck in den Versorgungseinheiten nahezu konstant gehalten und somit die Versorgungseinheiten gleichmäßiger versorgt werden. Dies führt zu einer Verbesserung des Wirkungsgrades der zentralen Kühl- und/oder Heizvorrichtung und zu einer Senkung der Betriebskosten.

Nach der Erfindung ist daher jeder Versorgungseinheit ein Durchgangsventil vorgeschaltet oder nachgeschaltet, das in Abhängigkeit des Differenzdruckes zwischen Zuführleitung und Rückführleitung so gesteuert bzw. geregelt wird, dass der Druck in den Versorgungseinheiten nahezu konstant gehalten wird. Dies dient der Differenzdruckstabilisierung. Als Folge davon ist auch in der zu der Versorgungseinheit gehörenden Verteilereinheit und in den von der Verteilereinheit gespeisten Kreisläufen ein nahezu konstantes Druckniveau und somit konstante Vorlauftemperaturen in den Kreisläufen garantiert. Die beschriebenen Leistungseinbußen aufgrund schwankender Vorlauftemperaturen in den Kreisläufen werden erfolgreich vermieden.

Entsprechend der Vorgabe der Regelung/Steuerung erfolgt die Öffnung/Schließung des Durchgangsventils durch einen Stellmotor. Auf einfache Weise kann dadurch der Volumenstrom des Fluids so gesteuert werden, dass nahezu konstante Druckbedingungen im Leitungsnetz der Versorgungseinheit vorliegen. Entsprechend der Größe der zentralen Kühl- und/oder Heizvorrichtung kann diese mehrere Versorgungseinheiten aufweisen, die beispielsweise jeweils ein Gebäude oder ein Gebäudeteil versorgen.

Um die Konstruktion oder auch die Nachrüstung bestehender Kühl- und oder Heizvorrichtungen zu erleichtern, kann der Einbau des zu jeder Versorgungseinheit gehörigen Durchgangsventils sowohl in der den Vorlauf bilden- X den Zuführleitung als auch in der den Rücklauf bildenden Rückführleitung erfolgen.

Erfolgt der Einbau des Durchgangsventils in die Zuführleitung, so muss der Druck in der Zuführleitung für den Differenzdruck zwischen Zuführleitung und Rückführleitung in Strömungsrichtung nach dem Durchgangsventil gemessen werden. Für den Einbau des Durchgangsventils in die Rückführleitung muss der Druck in der Rückführleitung für den Differenzdruck zwischen Zuführleitung und Rückführleitung in Strömungsrichtung vor dem Durchgangsventil bestimmt werden.

Entsprechend der geforderten Funktion und Leistung der zentralen Kühl- und/oder Heizvorrichtung sind mehrere separate Kreisläufe vorgesehen, wie beispielsweise ein Lüftungskreislauf, ein Heizkreislauf und ein Brauchwasserkreislauf. Die Kreisläufe bilden sogenannte hydraulische Schaltungen, insbesondere Einspritzschaltungen. Der Einfachheit halber können sämtliche Kreisläufe als identische hydraulische Schaltungen realisiert werden, aber auch eine Ausführung der Kreisläufe als verschiedene hydraulische Schaltungen ist möglich.

Gemäß einer Ausführungsform der Erfindung umfasst ein Kreislauf in der Regel eine in den Vorlauf oder Rücklauf eingebrachte Pumpe.

Zudem kann zumindest ein in den Vorlauf oder Rücklauf des Kreislaufes eingebrachtes Ventil vorgesehen sein.

Vorzugsweise weist ein in einen Kreislauf eingebrachter Bypass einen den Durchfluss durch den Bypass beeinflussenden Schieber auf.

Weitere Merkmale und Vorteile ergeben sich aus der folgenden Beschreibung mehrerer Ausführungsformen der Erfindung im Zusammenhang mit der Zeichnung. Es zeigen:
- Fig. 1: ein schematisches Schaltbild einer zentralen Kühl- und/oder Heizvorrichtung nach der Erfindung, bei der das Ventil zur Differenzdruckstabilisierung in die Rückführleitung eingebaut ist;
- Fig. 2: eine weitere Ausführungsform einer zentralen Kühl- und/oder Heizvorrichtung, bei der das Ventil zur Differenzdruckstabilisierung in die Zuführleitung eingebaut ist, und
- Fig. 3: eine weitere Ausführungsform der Erfindung, bei der die Druckmessung am entferntesten Punkt bezüglich der Einspeisung in die Verteilereinheit erfolgt.

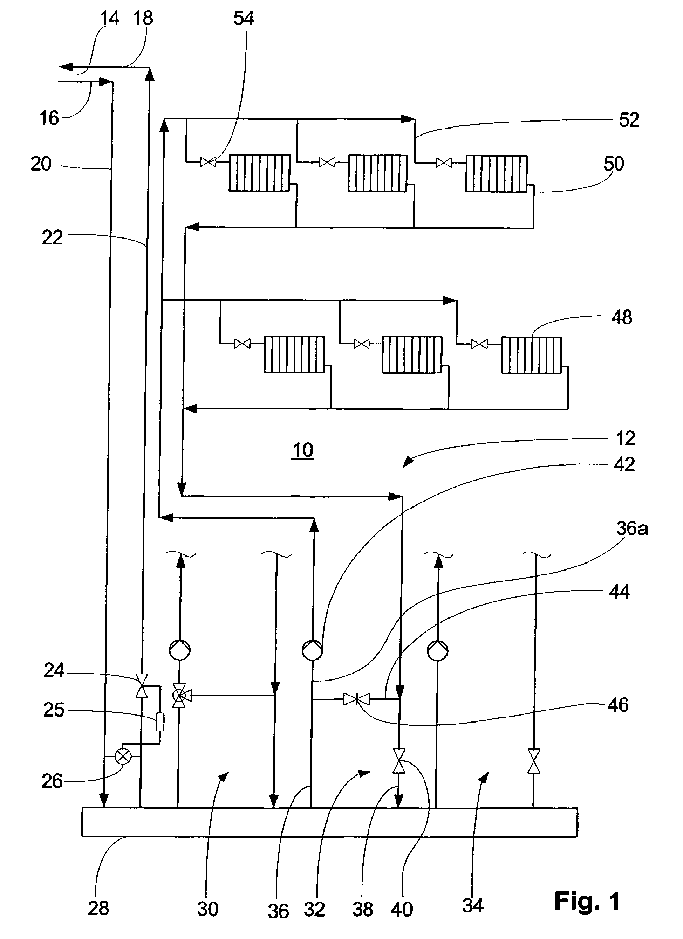

In Figur 1 ist schematisch eine Versorgungseinheit 12, die Teil einer zentralen Kühl- und Heizvorrichtung 10 nach der Erfindung ist, dargestellt. Der Einfachheit halber ist nur eine Versorgungseinheit 12 gezeigt. Die Kühl- und Heizvorrichtung 10 wird aber aus mehreren Versorgungseinheiten 12 gebildet, die entsprechend der dargestellten Versorgungseinheit 12 aufgebaut sind und jeweils ein Gebäude versorgen.

Die Hauptversorgungsleitung 14 weist einen Hauptvorlauf 16 und einen Hauptrücklauf 18 auf. Über die Zuführleitung 20 und Rückführleitung 22 ist eine Verteilereinheit 28 an die Hauptversorgungsleitung 14 angeschlossen. Die Verteilereinheit 28 ist Teil der Versorgungseinheit 12.

Die Versorgungseinheit 12 umfasst des Weiteren drei Kreisläufe 30, 32 und 34, nämlich einen Lüftungskreislauf 30, einen Heizkreislauf 32 und einen Brauchwasserkreislauf 34. Jeder der drei Kreisläufe 30, 32 und 34 verfügt über eine Vorlaufleitung 36, eine Pumpe 42 und eine Rücklaufleitung 38. Die Kreisläufe 30, 32 und 34 bilden verschiedene hydraulische Schaltungen. Die Kreisläufe 30, 32 und 34 sind aber an für sich bekannt, sodass sich eine weitere Beschreibung erübrigt. Nur auf den Heizkreislauf 32 wird im folgenden beispielhaft näher eingegangen.

Zur Differenzdruckstabilisierung zwischen der Zuführleitung 20 und Rückführleitung 22 und somit zur Einstellung eines konstanten Druckniveaus in der Verteilereinheit 28 und an den Vorlaufleitungen 36 und Rücklaufleitungen 38 der drei Kreisläufe 30, 32 und 34, ist in der Rückführleitung 22 ein Durchgangsventil 24 eingebracht. Die Regelung/Steuerung des Durchgangsventils 24 erfolgt über den Differenzdruckmesser 26, der in Strömungsrichtung vor dem Durchgangsventil 24 zwischen Zuführleitung 20 und Rückführleitung 22 angeordnet ist. Dabei ist der Differenzdruck zwischen Zuführleitung 20 und Rückführleitung 22 der Ist-Wert für die Regelung des Durchgangsventils 24 für die Differenzdruckstabilisierung, während der Sollwert variabel einstellbar ist. Die aufgrund der Regelung notwendige Öffnung bzw. Schließung des Durchgangsventils 24 wird über den Stellmotor 25 durchgeführt.

Der detailliert dargestellte Heizkreislauf 32 ist als Einspritzschaltung ausgebildet und mit mehreren Heizkörpern 48 versehen. Jedem Heizkörper 48 ist in der Zulaufleitung 52 ein Thermostatventil 54 zugeordnet. Die Zulaufleitung 52 des Heizkörpers 48 ist an den Vorlauf 36 und die Ablaufleitung 50 an den Rücklauf 38 des Heizkreislaufes 32 angeschlossen.

Die Vorlaufleitung 36 und die Rücklaufleitung 38 des Heizkreislaufes 32 sind über einen Bypass 44 miteinander verbunden, in dem ein mechanischer Schieber 46 integriert ist. Die Schieberstellung ist dabei fest eingestellt, also vollständig geöffnet. Er wird nicht verstellt.

Im Rücklauf 38 des Heizkreislaufes 32 ist stromabwärts vom Bypass 44 ein weiteres Ventil 40 zur Regulierung der Durchflussmenge und somit der Vorlauftemperatur eingebracht. Die Regelung/Steuerung des Ventils 40 erfolgt in Abhängigkeit von der Temperatur in dem dem Bypass nachgeordneten Teilstück 36a der Vorlaufleitung 36. Liegt eine erhöhte Vorlauftemperatur vor, so bewirkt die Steuerung, dass das Ventil 40 zunehmend geschlossen wird und dadurch ein anteilmäßig größerer Teil des Rückflusses über den Bypass 44 in das Teilstück 36a der Vorlaufleitung 36 erfolgt. Dadurch resultierend nimmt die gesamte über die Vorlaufleitung 36 in den Heizkreislauf 32 einfließende Größe des Volumenstrom des Wärmeträgers ab, wodurch die gewünschte Senkung der Temperatur im Teilstück 36a der Vorlaufleitung 36 erreicht wird.

In entsprechend umgekehrter Weise gegenteilig verhält es sich, wenn im Teilstück 36a der Vorlaufleitung 36 eine zu geringe Vorlauftemperatur vorliegt. Durch die weitere Öffnung des Ventils 40 erfolgt der Rückfluss des Wärmeträgers nahezu vollständig über die Rücklaufleitung 38 des Heizkreislaufes 32. Dadurch bedingt nimmt der in das Teilstück 36a der Vorlaufleitung 36 einfließende Volumenstrom des Wärmeträgers zu und die beabsichtigte Erhöhung der Temperatur in dem Teilstück 36a der Vorlaufleitung 36 stellt sich ein.

Die Regelung des Durchgangsventils 24 zur Differenzdruckstabilisierung bewirkt, dass der einfließende Volumenstrom des Fluids so geregelt wird, dass an sämtlichen an der Verteilereinheit 28 angeschlossenen Kreisläufen 30, 32 und 34 und somit an den Vorlaufleitungen 36 und Rücklaufleitungen 38 jeweils ein konstanter Druck herrscht, insbesondere also konstante Vorlauftemperaturen in den Vorlaufleitungen 36 bzw. in den Teilstücken 36a vorliegen, sodass Fehlzirkulationen durch den Bypass 44 vermieden werden. Die Kühl- und X Heizvorrichtung 10 arbeitet dann mit bestmöglichen Wirkungsgrad und es werden erhebliche Energieeinspareffekte erzielt.

Die Erfindung zeichnet sich dadurch aus, dass durch den Einbau des Durchgangsventils 24 in die Rückführleitung X 22 ein konstantes Druckniveau an der Verteilereinheit 28 und somit an den Vorlaufleitungen 36 und Rücklaufleitungen 38 der Kreisläufe 30, 32 und 34 gewährleistet wird, wodurch ein höherer Wirkungsgrad erzielt und damit erheblich Energie eingespart wird.

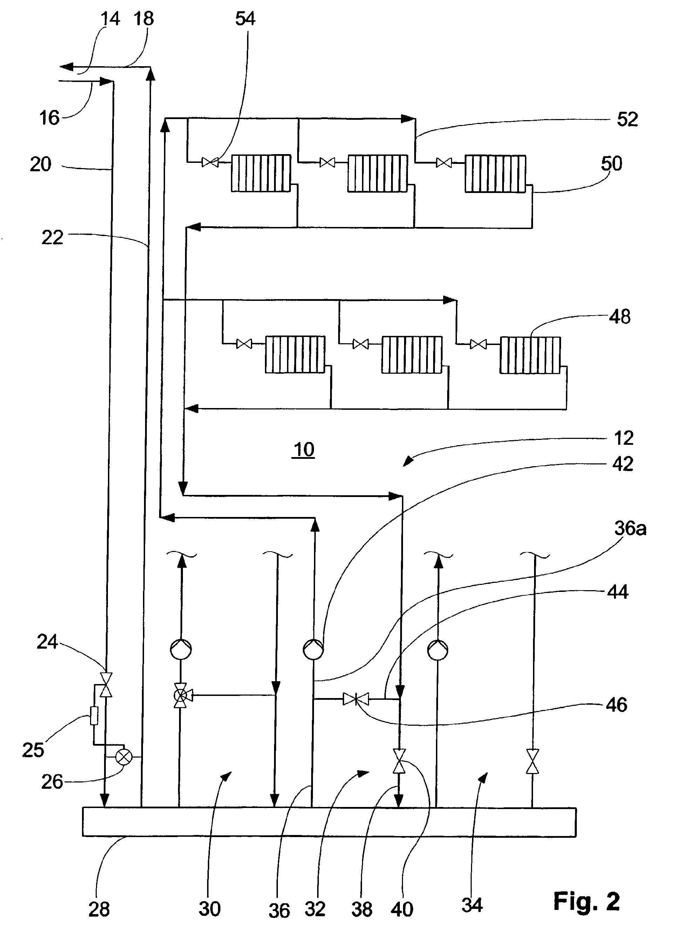

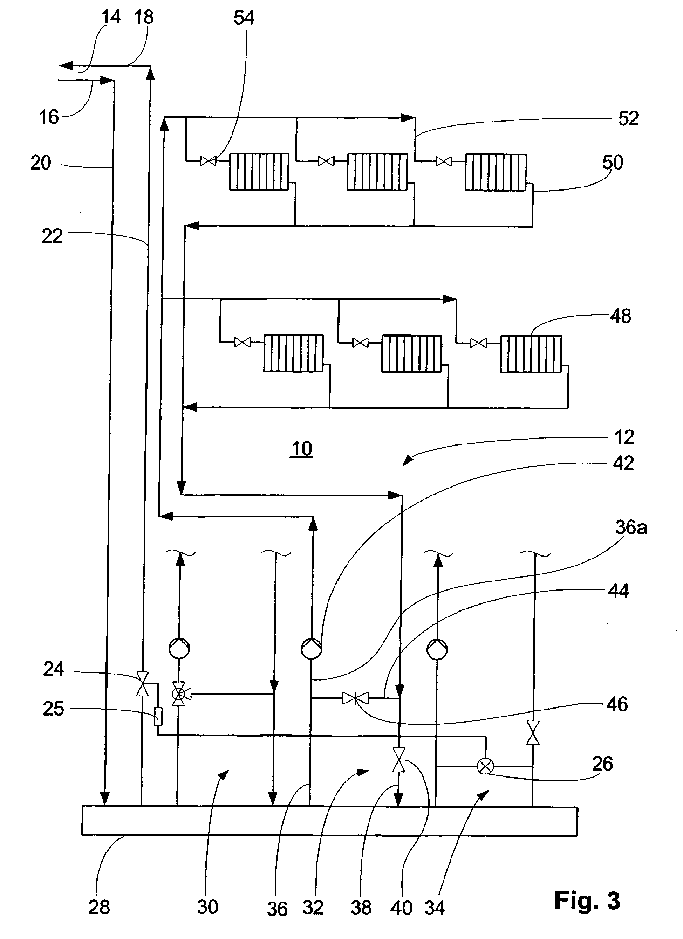

Weitere Ausführungsformen der Erfindung sind schematisch in den Figuren 2 und 3 dargestellt.

In Figur 2 ist eine nahezu baugleiche Ausführungsform der Erfindung dargestellt. Entscheidend bei dieser Ausführungsform ist, dass das Durchgangsventil 24 zur Differenzstabilisierung in die Zuführleitung 20 eingebracht ist und entsprechend die Druckmessung für den Differenzdruck zwischen Zuführleitung 20 und Rückführleitung 22 in Strömungsrichtung nach dem Durchgangsventil 24 erfolgt. Vor allem in Hinblick auf die Nachrüstung bestehender zentraler Kühl- und/oder Heizvorrichtungen ist es Vorteil, dass der nachträgliche Einbau wahlweise sowohl in der Zuführleitung 20 als auch in der Rückführleitung 22 erfolgen kann.

Die in Figur 3 dargestellte Ausführungsform zeichnet sich dadurch aus, dass die Druckmessung zur Bestimmung des Differenzdruckes am entferntesten Punkt bezüglich der Einspeisung in die Verteilereinheit 28, also zwischen Vorlauf 36 und Rücklauf 38 des Brauchwasserkreislauf 34, durchgeführt wird. Vorteil dieser Ausführungsform ist der Umstand, dass sämtliche vor der Differenzdruckbestimmung anfallenden Druckminderungen bzw. Druckschwankungen aufgrund von Rohrkrümmungen, angeschlossen Verbrauchern oder ähnliches berücksichtigt werden und somit eine präzisere Steuerung des Durchgangventil 24 möglich ist.

### Bezugszeichenliste

- 10: zentrale Kühl- und/oder Heizvorrichtung
- 12: Versorgungseinheit
- 14: Hauptversorgungsleitung
- 16: Hauptvorlauf
- 18: Hauptrücklauf
- 20: Zuführleitung
- 22: Rückführleitung
- 24: Durchgangsventil
- 25: Stellmotor
- 26: Differenzdruckmesser
- 28: Verteilereinheit
- 30: Lüftungskreislauf
- 32: Heizkreislauf
- 34: Brauchwasserkreislauf
- 36: Vorlauf Kreislauf
- 36a: Teilstück des Vorlauf Kreislauf
- 38: Rücklauf Kreislauf
- 40: Ventil
- 42: Pumpe
- 44: Bypass
- 46: Schieber
- 48: Heizkörper
- 50: Ablaufleitung Heizkörper
- 52: Zulaufleitung Heizkörper
- 54: Thermostatventil

## Patentansprüche

1. Zentrale Kühl- und/oder Heizvorrichtung (10) für zumindest ein Gebäude mit einem Leitungsnetz mit einer Hauptversorgungsleitung (14), die einen Hauptvorlauf (16) und einen Hauptrücklauf (18) umfasst, einem Fluid als Wärmeträger und/oder Kühlmittel im Leitungsnetz, einer Verteilereinheit (28), die über eine Zuführleitung (20) und eine Rückführleitung (22) mit der Hauptversorgungsleitung (14) verbunden ist, mindestens zwei jeweils eine Vorlaufleitung (36) und eine Rücklaufleitung (38) aufweisende Kreisläufe (30, 32, 34), die jeweils über ihre Vorlaufleitung (36) und ihre Rücklaufleitung (38) an die Verteilereinheit (28) angeschlossen sind, welche die Wärme über Heiz- und/oder Kühlkörper (48) abgegeben oder aufnehmen, wobei die Verteilereinheit (28) mit den angeschlossenen Kreisläufen (30, 32, 34) eine Versorgungseinheit (12) bilden, wobei zumindest ein Kreislauf (30, 32, 34) eine in die Vorlaufleitung (36) oder die Rücklaufleitung (38) eingebrachte Pumpe (42) enthält und dieser Kreislauf (30, 32, 34) einen Bypass (44) zwischen Vorlaufleitung (36) und Rücklaufleitung (38) aufweist, wobei Kreisläufe (30, 32, 34) einer Versorgungseinheit (12) verschieden ausgebildet sind, wobei mehrere Versorgungseinheiten (12) vorgesehen sind, und wobei jeder Versorgungseinheit (12) ein Durchgangsventil (24) vorgeschaltet oder nachgeschaltet ist, das in Abhängigkeit des Differenzdruckes zwischen Zuführleitung (20) und Rückführleitung (22) so gesteuert wird, dass der Druck in der Versorgungseinheit nahezu konstant gehalten wird.

2. Zentrale Kühl- und/oder Heizvorrichtung nach Anspruch 1, **dadurch gekennzeichnet, dass** ein Stellmotor (25) das Durchgangsventil (24) betätigt, der durch den Differenzdruck gesteuert wird.

3. Zentrale Kühl- und/oder Heizvorrichtung nach Anspruch 1 und 2, **dadurch gekennzeichnet, dass** das Durchgangsventil (24) in die Zuführleitung (20) eingebracht ist.

4. Zentrale Kühl- und/oder Heizvorrichtung nach Anspruch 3, **dadurch gekennzeichnet, dass** der Druck in der Zuführleitung (20) für den Differenzdruck zwischen Zuführleitung (20) und Rückführleitung (22) in Strömungsrichtung des Fluids nach dem Durchgangsventil (24) bestimmt wird.

5. Zentrale Kühl- und/oder Heizvorrichtung nach einem der vorangehenden Ansprüche, **dadurch gekennzeichnet, dass** das Durchgangsventil (24) in die Rückführleitung (22) eingebracht ist.

6. Zentrale Kühl- und/oder Heizvorrichtung nach Anspruch 5, **dadurch gekennzeichnet, dass** der Druck in der Rückführleitung (22) für den Differenzdruck zwischen Zuführleitung (20) und Rückführleitung (22) in Strömungsrichtung vor dem Durchgangsventil (24) bestimmt wird.

7. Zentrale Kühl- und/oder Heizvorrichtung nach einem der vorangehenden Ansprüche, **dadurch gekennzeichnet, dass** eine Versorgungseinheit (12) insbesondere einen Brauchwasserkreislauf (34), einen Heizkreislauf (32) und einen Lüftungskreislauf (30) umfasst.

8. Zentrale Kühl- und/oder Heizvorrichtung nach einem der vorangehenden Ansprüche, **dadurch gekennzeichnet, dass** ein Kreislauf (30, 32, 34) zumindest ein in die Vorlauf- oder Rücklaufleitung (36, 38) eingebrachtes Ventil (40) aufweist.

9. Zentrale Kühl- und/oder Heizvorrichtung nach Anspruch 8, **dadurch gekennzeichnet, dass** der Bypass (44) einen den Durchfluss durch den Bypass (44) beeinflussenden Schieber (46) aufweist.

## Claims

1. A central cooling and/or heating apparatus (10) for at least one building comprising: a pipeline network including one main supply line (14) which comprises a main flow line (16) and a main return line (18), a fluid as a heat transfer medium and/or coolant in said pipeline network, a distributor unit (28) which is connected to said main supply line (14) via a supply line (20) and a return line (22), at least two circuits (30, 32, 34) each including a circuit supply line (36) and a circuit return line (38) and each being connected to said distributor unit (28) via their respective supply and return lines (36, 38), which circuits (30, 32, 34) emit or absorb heat via heating and/or cooling radiators (48), which distributor unit (28), together with its associated circuits (30, 32, 34), forms a supply unit (12), in which at least one circuit (30, 32, 34) contains a pump disposed within said circuit supply line (36) or said circuit return line (38), said circuit ((30, 32, 34) including a bypass (44) between said circuit supply line (36) and said circuit return line (38), with the circuits (30, 32, 34) of one supply unit (12) being of different structure each, wherein a plurality of supply units (12) is provided and wherein a straight-through valve (24) is disposed upstream or downstream of each supply unit (12), which straight-through valve (24) is controlled as a function of the differential pressure between said supply line (20) and said return line (22) so as to maintain the pressure in the supply unit almost constant.

2. The central cooling and/or heating apparatus of claim 1 **characterized in that** a servo motor (25) actuates said straight-through valve (24), said servo motor (25) being controlled by said differential pressure.

3. The central cooling and/or heating apparatus of claims 1 and 2 **characterized in that** said straight-through valve (24) is disposed within said supply line (20).

4. The central cooling and/or heating apparatus of claim 3 **characterized in that** the pressure in said supply line (20) is determined for the differential pressure between said supply line (20) and said return line (22) in the direction of flow of said fluid downstream of said straight-through valve (24).

5. The central cooling and/or heating apparatus of one of the preceding claims **characterized in that** said straight-through valve (24) is disposed within said return line (22).

6. The central cooling and/or heating apparatus of claim 5 **characterized in that** the pressure in said return line (22) is determined for the differential pressure between said supply line (20) and said return line (22) in the direction of flow of said fluid upstream of said straight-through valve (24).

7. The central cooling and/or heating apparatus of one of the preceding claims **characterized in that** a supply unit (12) in particular comprises a service water circuit (34), a heating circuit (32) and a venting circuit (30).

8. The central cooling and/or heating apparatus of one of the preceding claims **characterized in that** a circuit (30, 32, 34) includes at least one valve (40) disposed within said supply or return lines (36, 38).

9. The central cooling and/or heating apparatus of claim 8 **characterized in that** said bypass (44) includes a slide valve (46) which governs the flow through said bypass (44).

## Revendications

1. Dispositif centralisé de refroidissement et/ou de chauffage (10) pour au moins un bâtiment avec un réseau de conduites comprenant une conduite d'alimentation principale (14) avec une conduite d'amenée (16) et une conduite de retour (18), un fluide comme moyen caloporteur et/ou un liquide de refroidissement dans le réseau de conduites, une unité de distribution (28), reliée à la conduite d'alimentation principale (14) par une conduite d'amenée (20) et une conduite de retour (22), au moins deux circuits (30, 32, 34) comprenant chacun une conduite d'amenée (36) et une conduite de retour (28), reliés chacun par leur conduites d'amenée (36) et leur conduites de retour (38) à l'unité de distribution (28), et recevant ou diffusant la chaleur par l'intermédiaires de corps de chauffage / ou de refroidissement (48), où l'unité de distribution (28) et les circuits qui lui sont connectés (30, 32, 34) forment une unité de d'alimentation (12), où au moins un circuit (30, 32, 34) comprend une pompe (42), soit dans la conduite d'amenée (36), soit dans la conduite de retour (38), et que ce circuit (30, 32, 34) comprend un bypass (44) entre la conduite d'amenée (36) et la conduite de retour (38), où les circuits (30, 32, 34) d'une unité d'alimentation (12) sont de conception différente, où sont prévues plusieurs unités d'alimentation (12) et où une vanne de passage (24), installée en amont ou en aval de chaque unité d'alimentation (12), est commandée en fonction de la pression différentielle entre la conduite d'amenée (20) et la conduite de retour (22) de telle façon que la pression dans l'unité d'alimentation est pratiquement maintenue constante.

2. Dispositif de refroidissement et/ou de chauffage suivant la revendication 1, **caractérisé en ce qu'**un servomoteur (25), asservi à la pression différentielle, actionne la vanne de passage (24).

3. Dispositif centralisé de refroidissement et/ou de chauffage suivant les revendications 1 ou 2, **caractérisé en ce que** la vanne de passage (24) est disposée dans la conduite d'amenée (20).

4. Dispositif centralisé de refroidissement et/ou de chauffage suivant la revendication 3, **caractérisé en ce que**, pour obtenir la pression différentielle entre la conduite d'amenée (20) et la conduite de retour (22), la pression est mesurée dans la conduite d'amenée (20) dans le sens de l'écoulement du fluide après la vanne de passage.

5. Dispositif centralisé de refroidissement et/ou de chauffage suivant l'une des revendications précédentes, **caractérisé en ce que** la vanne de passage (24) est installée dans la conduite de retour (22).

6. Dispositif centralisé de refroidissement et/ou de chauffage suivant la revendication 5, **caractérisé en ce que**, pour obtenir la pression différentielle entre la conduite d'amenée (20) et la conduite de retour (22), la pression est mesurée dans la conduite de retour (22) dans la direction d'écoulement avant la vanne de passage (24).

7. Dispositif centralisé de refroidissement et/ou de chauffage suivant l'une des revendications précédentes, **caractérisé en ce qu'**une unité d'alimentation (12) comprend, en particulier, un circuit d'eau industrielle (34), un circuit de chauffage (32) et un circuit d'aération (30).

8. Dispositif centralisé de refroidissement et/ou de chauffage suivant l'une des revendications précédentes, **caractérisé en ce qu'**un circuit (30, 32, 34) comprend au moins une vanne (40) installée dans la conduite d'amenée ou de retour (36, 38).

9. Dispositif centralisé de refroidissement et/ou de chauffage suivant la revendication 8, **caractérisé en ce que** le bypass (44) comprend un robinet-vanne (46) capable de modifier le débit à travers le bypass (44).
